# EUROPEAN PATENT SPECIFICATION

(11) **EP 0 484 301 B1**
(45) Date of publication and mention of the grant of the patent: **12.10.1994**
(21) Application number: 91830475.9
(22) Date of filing: 31.10.1991
(51) Int. Cl.: C01C 1/02

(54) **Process for the purification of ammonia**
Verfahren zur Reinigung von Ammoniak
Procédé pour purification d'ammoniac

(30) Priority: 02.11.1990 IT 2195890
(43) Date of publication of application: 06.05.1992
(73) Proprietor: SAES GETTERS S.p.A., I-20123 Milano (IT)
(72) Inventor: Succi, Marco, Milano (IT); Solcia, Carolina, Grezzano (Milano) (IT)
(74) Representative: Adorno, Silvano

(56) References cited:
- EP-A- 0 365 490
- FR-A- 2 447 745
- GB-A- 2 177 080
- US-A- 3 609 871
- US-A- 4 579 723
- US-A- 4 586 561

## Description

The invention relates to a process for the removal of O₂ or O₂ together with other impurity gases from impure ammonia.

Ammonia (NH₃) gas is widely used in the semi-conductor industry in processes such as chemical vapour deposition (CVD) and epitaxy.

The purity of the gas is of great importance as the yield of the circuits manufactured depends to a great degree upon this purity. While it is not possible to say what impurity level is associated with a given degree or number of defects found in any circuit it is possible to say that the higher the purity of gas used the greater is the yield of usable circuits.

In the past it has been common practice to use organic hydrocarbons or plastics for the removal of impurities from hydrogen containing gases such as NH₃. More recently there have been used hydrided getter metals or alloys. See for example EP-A-0470936.

However their use has led to one or more disadvantages. With organic hydrocarbons or plastic sorbents an increase of the operating temperature can cause the release of hydrocarbons with subsequent recontamination of the purified gas. The very nature of the materials is such that they may decompose and lead to the production of unwanted gases. The use of a hydrided getter metal or alloy has prevented the sorption of some of the undesirable gases. Furthermore the use of hydrided getters implies the introduction of additional costs and possible difficulties.

US-A-4586561 discloses how to remove H₂ from a H₂-containing NH₃ gas atmosphere by adsorption on/in Zr-based intermetallic alloys. The low adsorption temperature (less than 100°F =about 40°C) is not only imposed by the particular application in arctic condition, but also by the necessity of forming stable hydrides.

It is an object of the present invention to provide an improved process for the removal of O₂ or O₂ together with other impurity gases from impure gaseous NH₃, which does not require the use of organic support or plastics for the removal od these impurities from NH₃ and also does not require the use of a hydrided getter metal or alloy.

This object is achieved by means of a process according to the characterizing features of claim 1.

These and other advantages and objects of the present invention will become clear to those skilled in the art by reference to the following description and the drawing in which:

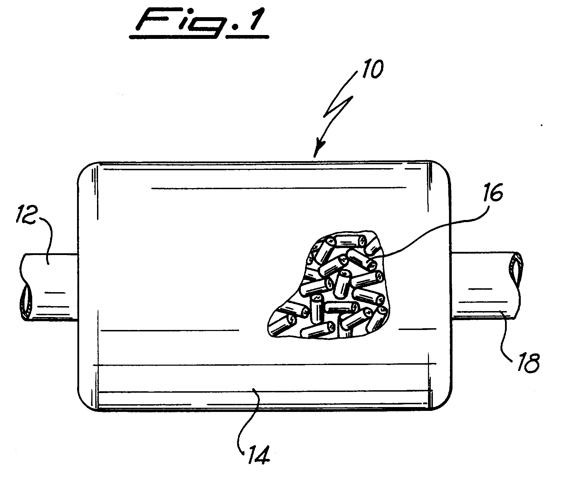

Fig. 1 is a schematic diagram, partially cut away, of an apparatus useful in a process of the present invention.

With reference to the drawing, there is illustrated an apparatus 10 useful in carrying out the process of the present invention for the removal of O₂ or O₂ together with other impurity gases from impure NH₃. Apparatus 10 comprises an impure gas inlet 12 through which enters the impure NH₃. Inlet 12 is in fluid communication with a chamber 14 for the purification of the NH₃ and contains a getter alloy 16. Chamber 14 is in fluid communication with a purified gas outlet 18.

Getter alloy 16 is in the form of a powder of particle size preferably less than 500 µm and more preferably less than 125 µm. It is preferably in the form of pellets, with or without a binder, suitable for incorporation within chamber 14.

The composition of the alloy is Zr-V-Fe.

Typical compositions of the ternary alloy according to the invention comprise:
Zr from 45 to 75, and preferably from 47 to 70% by weight
V from 20 to 50, and preferably from 24 to 45% by weight
Fe from 5 to 35, and preferably from 5 to 10% by weight.

The composition in weight percent when plotted on a ternary composition diagram in weight percent Zr, weight percent V and weight percent Fe lies within a polygon having as its corners the points defined by:
(a) 75% Zr - 20% V - 5% Fe
(b) 45% Zr - 20% V - 35% Fe
(c) 45% Zr - 50% V - 5% Fe
and preferably lies within the polygon having as its corners the points defined by:
(d) 70% Zr - 25% V - 5% Fe
(e) 70% Zr - 24% V - 6% Fe
(f) 66% Zr - 24% V - 10% Fe
(g) 47% Zr - 43% V - 10% Fe
(h) 47% Zr - 45% V - 8% Fe
(i) 50% Zr - 45% V - 5% Fe.

Alloys useful in the present invention are described in Boffito et al. U.S. Patent 4,312,669.

It should be realized that small amounts of other metals can be used without substantially altering its purification characteristics. For instance the iron may be partially replaced by nickel, or the vanadium may be partially replaced with niobium. It may be advantageous to replace some of the zirconium with titanium without substantially altering the main sorption ability of the basic ternary alloy. One or more substitutions may take place at the same time.

The temperature of activation of the Zr-V-Fe alloy should be high enough to clean the surface of the particles from oxides and nitrides that have formed during air exposure. This can be accomplished by heating in a vacuum or a flow of rare or inert gas to a temperature of greater than 300°C for a time of longer than 10 minutes, for example 400°C for 4 hours.

The alloy, when sorbing impurities from NH₃ must not cause its dissociation and must be held at a temperature below the temperature of appreciable dissociation of NH₃. This temperature should be less than 150°C and is preferably 100°C. A temperature of 100°C is sufficiently low to prevent NH₃ dissociation but sufficiently high to cause the Zr-V-Fe to be active towards impurity gases.

### EXAMPLE 1

A chamber 14 of an apparatus 10 was filled with 150 g of pellets, 4 mm in diameter and 3 mm in height, of compressed Zr-V-Fe powder. The nominal powder composition was 70% Zr - 24.6% V - 5.4% Fe by weight.

The getter alloy was heated to 400°C for 4 hours, in argon, for activation. The temperature was lowered to 100°C and argon containing 14 ppm oxygen and 11 ppm water vapour was allowed to flow at 200 cm³ per minute.

The oxygen level at the output was measured using an OSKMKIII/Y oxygen meter having a sensitivity of 2 ppb O₂. The moisture level of the output was measured using an AQUAMATIC+ having a sensitivity of <20 ppb.

The argon was allowed to flow and no impurities were detected at the output. The flow was continued until breakthrough was observed. Breakthrough is that point at which the impurity level in the output gas starts to be detected.

When breakthrough was observed, at the same time for both gases, the gas flow was interrupted. At breakthrough the quantity of impurities sorbed was 6 litre/litre for oxygen and 5 litre/litre for water vapor. This shows the ability of the purifier to remove H₂O and O₂ (NB: the units are litres of impurity/volume in litres of alloy).

### EXAMPLE 2

A new purifier was prepared exactly as in Example 1 and again was activated at 400°C for 4 hours in argon. The temperature was allowed to cool down to room temperature. NH₃ was allowed to flow and the temperature was increased up to 100°C. This was to prevent a sudden increase in temperature due to any exothermic reaction between NH₃ and the alloy. The impurity content of the NH₃ was
O₂ 1 ppm;
H₂O 3 ppm;
hydrocarbons < 1 ppm
The NH₃ was allowed to flow at a rate of 100 cm³ per minute for 15 days at a temperature of 100°C.

The purification efficiency was then tested by passing argon containing 30 ppm of O₂ and 30 ppm of H₂O through the purifier and measuring the output level. The argon flow rate was 1 litre/min. The levels of H₂O and O₂ were below the sensitivity limits of the measuring instruments, that is below 2 ppb for O₂ and below 20 ppb for water vapour, showing that the H₂ and O₂ from the water are removed stoichiometrically together with O₂.

After 150 minutes the values remained the same.

### EXAMPLE 3

To ensure that no NH₃ was dissociated He containing 500 ppm of NH₃ was passed through the purifier at a flow rate of 0.5 litre/minute. The purifier was held at a temperature of 100°C.

A VICI VALCO gas chromatograph was attached to the gas inlet and outlet of the chamber. An analysis of the NH₃ peaks showed no appreciable difference but the peaks were not well formed so the possible decomposition products were looked for.

Nitrogen was not detectable at either the inlet or outlet (0.2 ppm).

H₂ at a level of 5 ppm was detected at the output but is assumed to be due to desorption of that H₂ sorbed at initial conditions of pure NH₃.

## Claims

1. A process for the removal of O₂ or O₂ together with other impurity gases from impure gaseous NH₃, by passing said impure gaseous NH₃ through a chamber having an inlet for impure gaseous NH₃ and an outlet for purified gaseous NH₃, said process being characterized by the following steps:
A. Filling said chamber with a Zr-V-Fe alloy;
B. Heating said alloy at a temperature higher than 300°C for a time longer than 10 minutes, in the presence of argon, helium and/or other rare gases; and subsequently cooling said Zr-V-Fe alloy to a temperature below 150°C; and
C. Bringing said impure gaseous NH₃ into contact with said Zr-V-Fe alloy.

2. The process of claim 1, wherein the cooling temperature is below 100°C.

## Patentansprüche

1. Verfahren zum Entfernen von O₂ oder O₂ zusammen mit anderen Verunreinigungsgasen aus verunreinigtem gasförmigen NH₃, durch Passieren des verunreinigten gasförmigen NH₃ durch eine Kammer, welche ein Einlaß für das verunreinigte gasförmige NH₃ und ein Auslaß für das gereinigte gasförmige NH₃ hat, gekennzeichnet durch die folgenden Schritte:
A. Füllen der Kammer mit einer Zr-V-Fe-Legierung;
B. Erhitzen dieser Legierung auf eine Temperatur über 300°C für eine länger als 10 Minuten betragende Zeit in Anwesenheit von Argon, Helium und/oder anderen Edelgasen und anschließendes Kühlen der Zr-V-Fe-Legierung auf eine Temperatur unterhalb 150°C und
C. Inkontaktbringen des verunreinigten gasförmigen NH₃ mit der Zr-V-Fe-Legierung.

2. Verfahren nach Anspruch 1, bei dem die Kühltemperatur unterhalb 100°C liegt.

## Revendications

1. Un procédé pour l'élimination de O₂ ou de O₂ conjointement avec d'autres impuretés gazeuses de NH₃ gazeux impur, en faisant passer ledit NH₃ gazeux impur dans une chambre ayant une entrée pour le NH₃ gazeux impur et une sortie pour le NH₃ gazeux purifié, ledit procédé étant caractérisé par les étapes suivantes :
A. remplir ladite chambre avec un alliage Zr-V-Fe ;
B. chauffer ledit alliage à une température supérieure à 300°C pendant une durée dépassant 10 minutes, en présence d'argon, d'hélium et/ou d'autres gaz rares ; et ensuite refroidir ledit alliage Zr-V-Fe à une température en dessous de 150°C ; et
C. amener ledit NH₃ gazeux impur en contact avec ledit alliage Zr-V-Fe.

2. Le procédé de la revendication 1, dans lequel la température de refroidissement est en dessous de 100°C.
